# EUROPEAN PATENT APPLICATION

(11) **EP 4 521 833 A1**
(43) Date of publication of application: **12.03.2025**
(21) Application number: 23799214.4
(22) Date of filing: 27.04.2023
(51) Int. Cl.: H04W 72/04

(54) **DATA TRANSMISSION METHOD AND APPARATUS, AND STORAGE MEDIUM AND ELECTRONIC APPARATUS**

(30) Priority: 05.05.2022 CN 202210480845
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN); YU, Guanghui, Shenzhen, Guangdong 518057 (CN)
(74) Representative: Deambrogi, Edgardo
(86) International application number: PCT/CN2023/091315
(87) International publication number: WO 2023/213228

(57) **Abstract**

Provided in the present disclosure are a data transmission method and apparatus, and a storage medium and an electronic apparatus. The method comprises: transmitting, in N frequency domain resource blocks, data to be transmitted, wherein the N frequency domain resource blocks respectively include the same number K of sub-carriers, K is ith power of 2, i is a positive integer, and N is an integer greater than 1; respectively performing inverse Fourier transform on said data on the K sub-carriers of each frequency domain resource block, so as to form N groups of data sequences, wherein there are 2K points of inverse Fourier transform; performing inverse Fourier transform on the N groups of data sequences, so as to form a group of time domain data sequences, and transmitting the group of time domain data sequences. By means of the present disclosure, the problems of interference easily occurring between sub-carriers, etc., in the related art are solved.

## Description

The present disclosure claims priority to Chinese Patent Application No. 202210480845.X, filed with the China National Intellectual Property Administration on May 05, 2022 and entitled "Data Transmission Method and Apparatus, and Storage Medium and Electronic Apparatus", which is incorporated herein by reference in its entirety.

### Technical Field

The present disclosure relates to the field of communications, and in particular, to a data transmission method and apparatus, and a storage medium and an electronic apparatus.

### Background

Long Term Evolution (LTE) is a Fourth Generation (4G) wireless cellular communication technology. LTE employs an Orthogonal Frequency Division Multiplexing (OFDM) technology, where sub-carriers and OFDM symbols constitute wireless physical time frequency resources of an LTE system. Currently, the OFDM technology has been widely applied in wireless communications, especially in a Cyclic Prefix OFDM (CP-OFDM) system. Due to the adoption of a Cyclic Prefix (CP), the CP-OFDM system may effectively address multipath delay issues. In addition, frequency selective channels are divided into a set of parallel flat channels in the CP-OFDM system, which greatly simplifies channel estimation methods and achieves higher channel estimation accuracy. However, the performance of the CP-OFDM system is quite sensitive to frequency and time offsets between adjacent subbands, mainly due to significant spectral leakage of the CP-OFDM system, which can easily lead to inter-subband interference. Currently, the LTE system uses guard intervals in the frequency domain, but this reduces spectral efficiency, hence new technologies are needed to suppress out-of-band leakage.

The Fifth Generation New Radio (5G NR) communication technology still uses CP-OFDM as a basic waveform, and different sub-carrier spacing types may be used between two adjacent sub-bands, which damages the orthogonality between the sub-carriers and brings new interference issues. In addressing the interference issues, a rather straightforward method is to insert a guard bandwidth between two transmission bands with different parameters, but this would result in the waste of frequency resources.

The frequency bands used for Sixth Generation (6G) services in the future will span a wide range, and the deployment methods of the frequency bands will be diverse. There will be a need not only for multi-bandwidth channels but also for waveform solutions that cater to different scenarios.

Regarding the problems such as interference between sub-carriers in the related art, no effective solutions have been proposed yet.

### Summary

Embodiments of the present disclosure provide a data transmission method and apparatus, and a storage medium and an electronic apparatus, which may at least solve the problems such as interference between sub-carriers in the related art.

According to an embodiment of the present disclosure, provided is a data transmission method, including: transmitting, in N frequency domain resource blocks, data to be transmitted, wherein the N frequency domain resource blocks respectively contain a same number K of sub-carriers, K is an ith power of 2, i is a positive integer, and N is an integer greater than 1; respectively performing an inverse Fourier transform on data to be transmitted on the K sub-carriers of each of the N frequency domain resource blocks so as to obtain N groups of data sequences, wherein a number of points of the inverse Fourier transform is 2K; and performing an inverse Fourier transform on the N groups of data sequences so as to obtain one group of time domain data sequences, and transmitting the group of time domain data sequences.

According to another embodiment of the present disclosure, provided is a data transmission apparatus, including: a transmission module, configured to transmit data to be transmitted in N frequency domain resource blocks, wherein the N frequency domain resource blocks respectively contain a same number K of sub-carriers, K is an ith power of 2, i is a positive integer, and N is an integer greater than 1; a transformation module, configured to respectively perform an inverse Fourier transform on data to be transmitted on the K sub-carriers of each of the N frequency domain resource blocks so as to obtain N groups of data sequences, wherein a number of points of the inverse Fourier transform is 2K; and a processing module, configured to perform an inverse Fourier transform on the N groups of data sequences so as to obtain one group of time domain data sequences, and transmitting the group of time domain data sequences.

By means of the present disclosure, inverse Fourier transform is respectively performed on data to be transmitted on K sub-carriers of each of the N frequency domain resource blocks so as to obtain N groups of data sequences, and the number of inverse Fourier transform points of the data to be transmitted is 2K for each inverse Fourier transform; and then inverse Fourier transform is performed on the N groups of data sequences so as to obtain one group of time domain data sequences. Each group of data sequences in the N groups of data sequences formed in this manner may be considered as a time domain data sequence at a frequency domain resource block level, adjacent data intervals thereof are the same, and the length of each group of time domain data sequences is also the same. Since the number of inverse Fourier transform points of the data to be transmitted is 2K, after the filtering operation, not only can the adjacent resource blocks be ensured to be orthogonal, but also the interval between adjacent groups of the time domain data sequences generated by each set of inverse Fourier transform is just half of the length of the time domain data sequence, such that the processing complexity will be relatively low, and the problems such as interference between sub-carriers in the related art are solved.

### Brief Description of the Drawings

Drawings, provided for further understanding of the present disclosure and forming a part of the specification, are used to explain the present disclosure together with exemplary embodiments of the present disclosure rather than to limit the present disclosure. In the drawings:
Fig. 1 is a block diagram illustrating an exemplary hardware structure of a computer terminal for a data transmission method according to the embodiments of the present disclosure;
Fig. 2 is a flowchart of an exemplary data transmission method according to the embodiments of the present disclosure;
Fig. 3 is a schematic diagram of an exemplary data transmission method according to the embodiments of the present disclosure;
Fig. 4 is a schematic diagram of another exemplary data transmission method according to the embodiments of the present disclosure;
Fig. 5 is a schematic diagram of still another exemplary data transmission method according to the embodiments of the present disclosure; and
Fig. 6 is a structural block diagram of an exemplary data transmission apparatus according to the embodiments of the present disclosure.

### Detailed Description

Hereinafter, the present disclosure will be described in detail with reference to the accompanying drawings and embodiments. It is important to note that the embodiments of the present disclosure and the characteristics in the embodiments can be combined under the condition of no conflicts.

It should be noted that, terms such as "first" and "second" in the description, claims, and accompanying drawings of the present disclosure are used to distinguish similar objects, but are not necessarily used to describe a specific sequence or order.

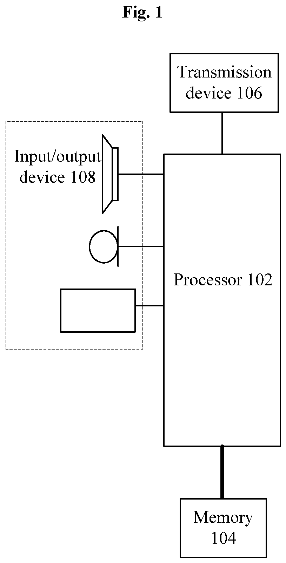

The method embodiments provided in the embodiments of the present disclosure may be executed in a computer terminal or a similar computing apparatus. Taking the execution in the computer terminal as an example, Fig. 1 is a block diagram illustrating an exemplary hardware structure of a computer terminal for a data transmission method according to the embodiments of the present disclosure. As shown in Fig. 1, the computer terminal 10 may include one or more (only one is shown in the figure) processors 102 (each of the one or more processors 102 may include but are not limited to a processing device such as a microprocessor (for example, a Micro Controller Unit (MCU)) or a programmable logic device (for example, a Field Programmable Gate Array (FPGA)), a memory 104 configured to store data, and a transmission device 106 configured to implement communication functions. A person having ordinary skill in the art may understand that the structure shown in Fig. 1 is only illustrative, which does not limit the structure of the above electronic apparatus. For example, the computer terminal 10 may also include more or fewer components than shown in Fig. 1, or have a different configuration than that shown in Fig. 1.

The memory 104 may be configured to store software programs and modules of application software, such as program instructions/modules corresponding to the data transmission method in the embodiments of the present disclosure, and the one or more processors 102 execute various functional applications and data processing by running the software programs and modules stored in the memory 104, thereby implementing the described method. The memory 104 may include high-speed random access memory, and may also include non-volatile memory, such as one or more magnetic storage devices, flash memory, or other non-volatile solid-state memory. In some instances, the memory 104 may further include a memory remotely located with respect to the one or more processors 102, which may be connected to the computer terminal 10 over a network. Examples of such networks include, but are not limited to, the internet, intranets, local area networks, mobile communication networks, and combinations thereof.

The transmission device 106 is configured to receive or transmit data via a network. Specific examples of the described network may include a wireless network provided by a communication provider of the computer terminal 10. In an embodiment, the transmission device 106 may include a Network Interface Controller (NIC) that may interface with other network devices via a base station to communicate with the Internet. In an embodiment, the transmission device 106 may be a Radio Frequency (RF) module configured to wirelessly communicate with the Internet.

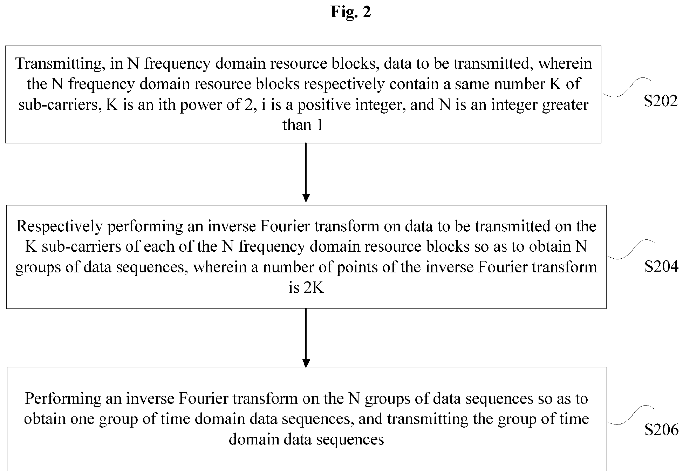

Provided in an embodiment of the present disclosure is a data transmission method operating on the described computer terminal. Fig. 2 is a flowchart of an exemplary data transmission method according to the embodiments of the present disclosure. As shown in Fig. 2, a flow of the data transmission method includes the following operations S202 to S206.

In operation S202, data to be transmitted is transmitted in N frequency domain resource blocks, wherein the N frequency domain resource blocks respectively contain a same number K of sub-carriers, K is an ith power of 2, i is a positive integer, and N is an integer greater than 1.

In operation S204, an inverse Fourier transform is respectively performed on data to be transmitted on the K sub-carriers of each of the N frequency domain resource blocks so as to obtain N groups of data sequences, wherein a number of points of the inverse Fourier transform is 2K.

In operation S206, an inverse Fourier transform is performed on the N groups of data sequences so as to obtain one group of time domain data sequences, and transmitting the group of time domain data sequences.

By means of the above operations, inverse Fourier transform is respectively performed on data to be transmitted on K sub-carriers of each of the N frequency domain resource blocks so as to obtain N groups of data sequences, and the number of inverse Fourier transform points of the data to be transmitted is 2K for each inverse Fourier transform; and then inverse Fourier transform is performed on the N groups of data sequences so as to obtain one group of time domain data sequences. Each group of data sequences in the N groups of data sequences formed in this manner may be considered as a time domain data sequence at a frequency domain resource block level, adjacent data intervals thereof are the same, and the length of each group of time domain data sequences is also the same. Since the number of inverse Fourier transform points of the data to be transmitted is 2K, after the filtering operation, not only can the adjacent resource blocks be ensured to be orthogonal, but also the interval between adjacent groups of the time domain data sequences generated by each set of inverse Fourier transform is just half of the length of the time domain data sequence, such that the processing complexity will be relatively low, and the problems such as interference between sub-carriers in the related art are solved.

In an exemplary embodiment, frequency spectrum intervals between adjacent frequency domain resource blocks in the N frequency domain resource blocks are equal.

In an exemplary embodiment, spectrum bandwidths of the N frequency domain resource blocks are equal.

In an exemplary embodiment, sub-carrier intervals of the N frequency domain resource blocks are equal.

In an exemplary embodiment, K zeros are added to the data to be transmitted on the K sub-carriers, and then an oversampling inverse Fourier transform is performed on the data to be transmitted added with the K zeros, so as to obtain the N groups of data sequences.

As an exemplary implementation of the embodiment, the K zeros are added in a manner of adding K/2 zeros before K pieces of data to be transmitted and after the K pieces of data to be transmitted.

In an exemplary embodiment, in a process of respectively performing the inverse Fourier transform on the data to be transmitted on the K sub-carriers of each of the N frequency domain resource blocks, zero frequency positions of respective inverse Fourier transforms or positions of zero sub-carriers in a frequency domain of the respective inverse Fourier transforms are different.

In an exemplary embodiment, in a process of respectively performing the inverse Fourier transform on the data to be transmitted on the K sub-carriers of each of the N frequency domain resource blocks, zero frequency positions or zero sub-carriers of respective inverse Fourier transforms are respectively within a frequency range of the K sub-carriers of each of the N frequency domain resource blocks.

In an exemplary embodiment, in a process of respectively performing the inverse Fourier transform on the data to be transmitted on the K sub-carriers of each of the N frequency domain resource blocks, zero frequency positions or zero sub-carriers of respective inverse Fourier transforms are respectively in one of the K sub-carriers of each of the N frequency domain resource blocks.

In an exemplary embodiment, the inverse Fourier transform is an oversampling inverse Fourier transform, and the inverse Fourier transform has more than N Inverse Fast Fourier Transform (IFFT) points.

It should be noted that the foregoing IFFT points are points of inverse fast Fourier transform. It should be noted that the number of IFFT points refers to the IFFT size. The number of points of the inverse Fourier transform may be understood as the number of frequency domain data before the transform, or the number of points of the inverse Fourier transform may be understood as the IFFT size.

In an exemplary embodiment, the inverse Fourier transform includes: performing one inverse Fourier transform on every N pieces of data, wherein the N pieces of data are respectively from the N groups of data sequences.

To help understand the foregoing embodiment, for example, N groups of data sequences are placed in N rows, then N pieces of data are extracted according to a column, and the extracted N pieces of data is subjected to one inverse Fourier transform.

As an exemplary implementation of the embodiment, the N groups of data sequences may be processed in a manner of adding multiple groups of zero data sequences, and then performing inverse Fourier transform. That is, after some zeros are added to every N pieces of data that are extracted, an inverse Fourier transform is performed.

As an exemplary implementation of the embodiment, the N groups of data sequences may be processed in a manner of adding data of other frequency domain resource blocks to every N pieces of data, and then performing inverse Fourier transform, wherein the other frequency domain resource blocks are not in the N frequency domain resource blocks.

As an exemplary implementation of the embodiment, the N groups of data sequences may be processed in a manner of adding data and zeros of other frequency domain resource blocks to every N pieces of data, and then performing the inverse Fourier transform. The other frequency domain resource blocks are not in the N frequency domain resource blocks.

In an exemplary embodiment, the one group of time domain data sequences is obtained by serially linking time domain data sequences generated by multiple inverse Fourier transforms.

As an exemplary implementation of the embodiment, before performing the inverse Fourier transform on the N groups of data sequences, the data transmission method may further include respectively adding a Cyclic Prefix (CP) to each of the N groups of data sequences.

As an exemplary implementation of the embodiment, a Guard Interval (GI) is added to each of N groups of data sequences, where the guard interval is null data (i.e., zero data).

In an exemplary embodiment, before the group of time domain data sequences is transmitted, the group of time domain data sequences is filtered, wherein the filtering includes at least one of: single-phase filtering, multi-phase filtering, and windowing.

In an exemplary embodiment, the filtering or windowing includes: respectively performing a repetition and windowing operation on respective sets of time domain data sequences generated by respective inverse Fourier transforms in the group of time domain data sequences, and then obtaining a new group of time domain data sequences by performing a misaligned overlapping and adding operation on the respective sets of time domain data sequences, wherein after the filtering or windowing is performed, an interval between adjacent sets of time domain data sequences generated by the respective inverse fast Fourier transforms is half of a length of each set of time domain data sequences.

In an exemplary embodiment, the data to be transmitted includes at least one of constellation point modulated data and reference signal data.

In an exemplary embodiment, K = 2 or K = 4 or K = 16 or K = 32.

Through the description of the foregoing embodiments, those having ordinary skill in the art may clearly understand that the data transmission method according to the foregoing embodiments may be implemented by software in addition to a necessary universal hardware platform, and definitely may also be implemented by hardware, however, in many cases, the former is a preferred implementation. Based on such understanding, the essence of the technical solutions of the present disclosure or the part contributing to the related art may be embodied in the form of a software product, the computer software product is stored in a storage medium (such as a Read-Only Memory (ROM)/Random Access Memory (RAM), a magnetic disk, and an optical disk), and includes several instructions for instructing a terminal device (which may be a mobile phone, a computer, a server, a network device, or the like).

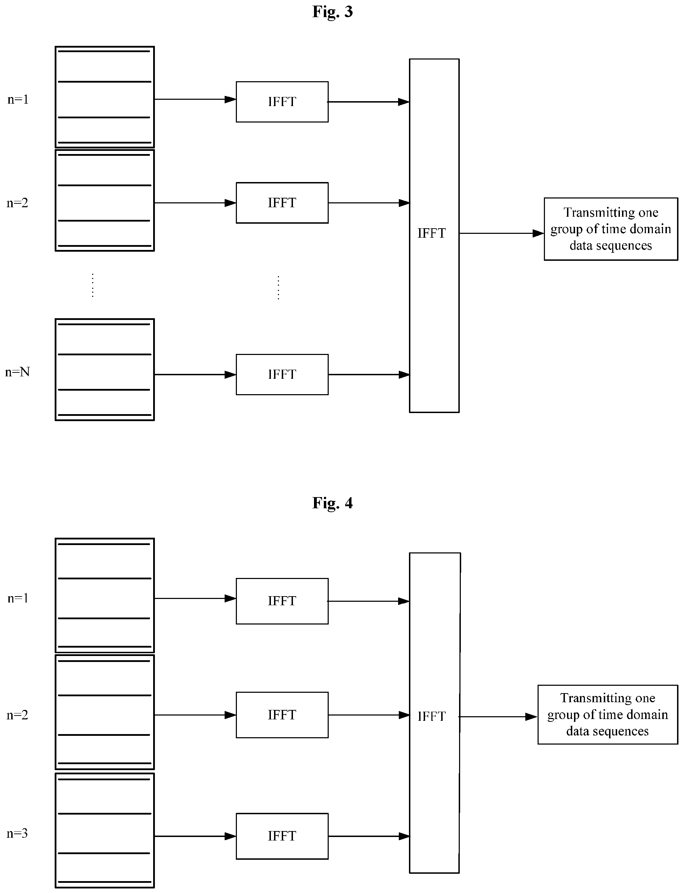

Fig. 3 is a schematic diagram of an exemplary data transmission method according to the embodiments of the present disclosure. As shown in Fig. 3, in this embodiment:
Data to be transmitted is transmitted in N frequency domain resource blocks, wherein each of the N frequency domain resource blocks respectively contains K sub-carriers. In the present embodiment, K = 4, i.e., each of the N frequency domain resource blocks respectively contains 4 sub-carriers.

An inverse Fourier transform with the number of points being 8 is respectively performed on data to be transmitted on 4 sub-carriers of each frequency domain resource block, so as to obtain N groups of data sequences. The N groups of data sequences may be seen as N groups of time domain data sequences at a frequency domain resource block level, wherein zero sub-carriers of respective inverse Fourier transforms with the number of points being 8 are respectively one of the 4 sub-carriers of each frequency domain resource block. Then, an inverse Fourier transform is performed on the N groups of time domain data sequences so as to obtain one group of time domain data sequences, and the group of time domain data sequences is finally transmitted.

Fig. 4 is a schematic diagram of another exemplary data transmission method according to the embodiments of the present disclosure. As shown in Fig. 4, in this embodiment:
Data to be transmitted is transmitted in N frequency domain resource blocks, wherein each of the N frequency domain resource blocks respectively contains K sub-carriers. In the present embodiment, K = 4, and N = 3, i.e., in the present embodiment, the number of frequency domain resource blocks is 4, and the number of sub-carriers is 3.

Assuming that data to be transmitted on the 4 sub-carriers of each frequency domain resource block respectively are [A1, A2, A3, A4], [B1, B2, B3, B4], and [C1, C2, C3, C4], 4 zeros are respectively added to the three groups of data to be transmitted, and the three groups of data to which zeros are added are respectively [0, 0, A1, A2, A3, A4, 0, 0], [0, 0, B1, B2, B3, B4, 0, 0], and [0, 0, C1, C2, C3, C4, 0, 0]. An oversampling inverse Fourier transform with the number of points being 8 is respectively performed on the data to be transmitted of each frequency domain resource block, so as to obtain three groups of time domain data sequences respectively being [a1, a2, a3, a4, a5, a6, a7, a8], [b1, b2, b3, b4, b5, b6, b7, b8], and [c1, c2, c3, c4, c5, c6, c7, c8]. Then, a plurality of oversampling inverse Fourier transforms are performed on the three groups of time domain data sequences. Assuming that the number of points of the inverse fast Fourier transform is 16, the first set of data obtained by performing the 16-point inverse fast Fourier transform IFFT on [a1, b1, c1] is [D1-1, D1-2, D1-3, D1-4, D1-5, D1-6, D1-7, D1-8, D1-9, D1-10, D1-11, D1-12, D1-13, D1-14, D1-15, D1-16], the second set of data obtained by performing the 16-point IFFT on [a2, b2, c2] is [D2-1, D2-2, D2-3, D2-4, D2-5, D2-6, D2-7, D2-8, D2-9, D2-10, D2-11, D2-12, D2-13, D2-14, D2-15, D2-16], and so on, and the eighth set of data obtained by performing the16-point IFFT operation on [a8, b8, c8] is [D8-1, D8-2, D8-3, D8-4, D8-5, D8-6, D8-7, D8-8, D8-9, D8-10, D8-11, D8-12, D8-13, D8-14, D8-15, D8-16], the 8 sets of data sequences are linked in series to form one group of time domain data sequences, and then the one group of time domain data sequences is transmitted.

The operation of transmitting the group of time domain data sequences may be performed after a filtering operation. In this embodiment, the filtering operation includes: performing a windowing operation on the 8 sets of time domain data sequences generated by eight inverse Fourier transforms in the group of time domain data sequences respectively, and then performing a misaligned overlapping and adding operation to obtain a new group of time domain data sequences. The time domain length of the windowing function is greater than or equal to the length of each set of time domain data sequences. In this embodiment, it is assumed that the time domain length of the windowing function is also equal to 16, the data obtained after performing a windowing operation on the first set of data is [d1-1, d1-2, d1-3, d1-4, d1-5, d1-6, d1-7, d1-8, d1-9, d1-10, d1-11, d1-12, d1-13, d1-14, d1-15, d1-16], the data obtained after performing a windowing operation on the second set of data is [d2-1, d2-2, d2-3, d2-4, d2-5, d2-6, d2-7, d2-8, d2-9, d2-10, d2-11, d2-12, d2-13, d2-14, d2-15, d2-16], by analogy, the data obtained after performing a windowing operation on the eighth set of data is [d8-1, d8-2, d8-3, d8-4, d8-5, d8-6, d8-7, d8-8, d8-9, d8-10, d8-11, d8-12, d8-13, d8-14, d8-15, d8-16]. The length of each set of time domain data sequences is 16, and the interval between adjacent sets is 8, and therefore the new group of time domain data sequences after the misaligned overlapping and adding operation is [d1-1, d1-2, d1-3, d1-4, d1-5, d1-6, d1-7, d1-8, d1-9+d2-1, d1-10+d2-2, d1-11+d2-3, d1-12+d2-4, d1-13+d2-5, d1-14+d2-6, d1-15+d2-7, d1-16+d2-8, d2-9+d3-1, d2-10+d3-2, d2-11+d3-3, d2-12+d3-4, d2-13+d3-5, d2-14+d3-6, d2-15+d3-7, d2-16+d3-8, ..., d7-9+d8-1, d7-10+d8-2, d7-11+d8-3, d7-12+d8-4, d7-13+d8-5, d7-14+d8-6, d7-15+d8-7, d7-16+d8-8, d8-9, d8-10, d8-11, d8-12, d8-13, d8-14, d8-15, d8-16]. It can be seen from the above data that after the filtering operation, an interval between adjacent sets of time domain data sequences generated by the respective inverse fast Fourier transforms is half of a length of each set of time domain data sequences.

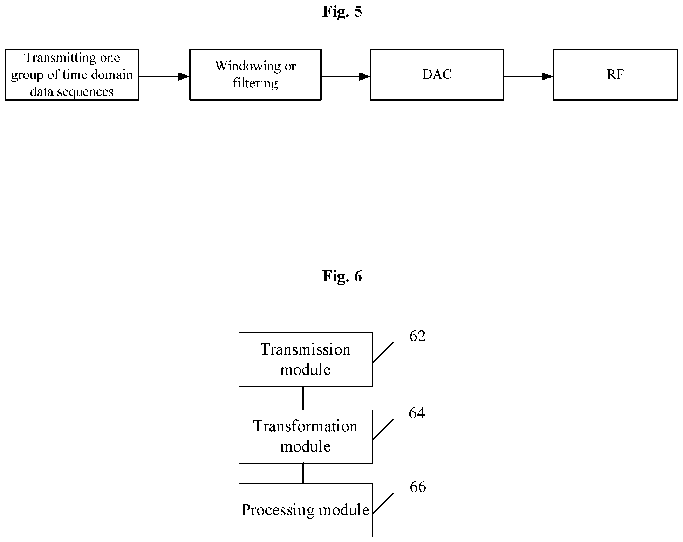

Fig. 5 is a schematic diagram of still another exemplary data transmission method according to the embodiments of the present disclosure. As shown in Fig. 5, in this embodiment:
The operation of transmitting one group of time domain data sequences may further include: after windowing or filtering the group of time domain data sequences, a Digital-Analog Converter (DAC) and a Radio Frequency (RF) process are performed.

The aforementioned windowing process includes: grouping the time domain data sequences, then performing periodic extension, then multiplying by a preset windowing function on a point-wise basis, and then performing misaligned overlapping between different sets of time domain data sequences.

The aforementioned filtering includes: single-phase filtering and multi-phase filtering. Single-phase filtering is an ordinary filtering procedure; multi-phase filtering requires the joint processing of multiple filters.

Fig. 6 is a structural block diagram of an exemplary data transmission apparatus according to the embodiments of the present disclosure. As shown in Fig. 6, the data transmission apparatus includes:
a transmission module 62, configured to transmit data to be transmitted in N frequency domain resource blocks, wherein the N frequency domain resource blocks respectively contain a same number K of sub-carriers, K is an ith power of 2, i is a positive integer, and N is an integer greater than 1;
a transformation module 64, configured to respectively perform an inverse Fourier transform on data to be transmitted on the K sub-carriers of each of the N frequency domain resource blocks so as to obtain N groups of data sequences, wherein a number of points of the inverse Fourier transform is 2K; and
a processing module 66, configured to perform an inverse Fourier transform on the N groups of data sequences so as to obtain one group of time domain data sequences, and transmitting the group of time domain data sequences.

By means of the data transmission apparatus, inverse Fourier transform is respectively performed on data to be transmitted on K sub-carriers of each of the N frequency domain resource blocks so as to obtain N groups of data sequences, and the number of inverse Fourier transform points of the data to be transmitted is 2K for each inverse Fourier transform; and then inverse Fourier transform is performed on the N groups of data sequences so as to obtain one group of time domain data sequences. Each group of data sequences in the N groups of data sequences formed in this manner may be considered as a time domain data sequence at a frequency domain resource block level, adjacent data intervals thereof are the same, and the length of each group of time domain data sequences is also the same. Since the number of inverse Fourier transform points of the data to be transmitted is 2K, after the filtering operation, not only can the adjacent resource blocks be ensured to be orthogonal, but also the interval between adjacent groups of the time domain data sequences generated by each set of inverse Fourier transform is just half of the length of the time domain data sequence, such that the processing complexity will be relatively low, and the problems such as interference between sub-carriers in the related art are solved.

In an exemplary embodiment, frequency spectrum intervals between adjacent frequency domain resource blocks in the N frequency domain resource blocks are equal.

In an exemplary embodiment, spectrum bandwidths of the N frequency domain resource blocks are equal.

In an exemplary embodiment, sub-carrier intervals of the N frequency domain resource blocks are equal.

In an exemplary embodiment, the transformation module 64 is further configured to add K zeros to the data to be transmitted on the K sub-carriers, and perform an oversampling inverse Fourier transform on the data to be transmitted added with the K zeros, so as to obtain the N groups of data sequences.

As an exemplary implementation of the embodiment, the transformation module 64 is further configured to add K/2 zeros before K pieces of data to be transmitted and after the K pieces of data to be transmitted.

In an exemplary embodiment, the transformation module 64 is further configured so that, in a process of respectively performing the inverse Fourier transform on the data to be transmitted on the K sub-carriers of each of the N frequency domain resource blocks, zero frequency positions of respective inverse Fourier transforms or positions of zero sub-carriers in a frequency domain of the respective inverse Fourier transforms are different.

In an exemplary embodiment, the transformation module 64 is further configured so that, in a process of respectively performing the inverse Fourier transform on the data to be transmitted on the K sub-carriers of each of the N frequency domain resource blocks, zero frequency positions or zero sub-carriers of respective inverse Fourier transforms are respectively within a frequency range of the K sub-carriers of each of the N frequency domain resource blocks.

In an exemplary embodiment, the transformation module 64 is further configured so that, in a process of respectively performing the inverse Fourier transform on the data to be transmitted on the K sub-carriers of each of the N frequency domain resource blocks, zero frequency positions or zero sub-carriers of respective inverse Fourier transforms are respectively in one of the K sub-carriers of each of the N frequency domain resource blocks.

In an exemplary embodiment, the inverse Fourier transform is an oversampling inverse Fourier transform, and the inverse Fourier transform has more than N Inverse Fast Fourier Transform (IFFT) points.

In an exemplary embodiment, one inverse Fourier transform is performed on every N pieces of data, wherein the N pieces of data are respectively from the N groups of data sequences.

In an exemplary embodiment, the transformation module 64 is further configured to add data of other frequency domain resource blocks to every N pieces of data, and then perform inverse Fourier transform, wherein the other frequency domain resource blocks are not in the N frequency domain resource blocks.

To help understand the foregoing embodiment, for example, N groups of data sequences are placed in N rows, then N pieces of data are extracted according to a column, and the extracted N pieces of data is subjected to one inverse Fourier transform.

As an exemplary implementation of the embodiment, the processing module 66 is further configured to add multiple groups of zero data sequences, and then perform inverse Fourier transform. That is, after some zeros are added to every N pieces of data that are extracted, an inverse Fourier transform is performed.

In an exemplary embodiment, the one group of time domain data sequences is obtained by serially linking time domain data sequences generated by multiple inverse Fourier transforms.

As an exemplary implementation of the embodiment, the processing module 66 is further configured to respectively add a Cyclic Prefix (CP) to each of the N groups of data sequences.

As an exemplary implementation of the embodiment, the processing module 66 is further configured to add a Guard Interval (GI) to each of N groups of data sequences, where the guard interval is null data (i.e., zero data).

In an exemplary embodiment, the processing module 66 is configured to filter the group of time domain data sequences, wherein the filtering includes at least one of: single-phase filtering, multi-phase filtering, and windowing.

In an exemplary embodiment, the processing module 66 is further configured to perform the filtering or windowing operation, which includes: respectively performing a repetition and windowing operation on respective sets of time domain data sequences generated by respective inverse Fourier transforms in the group of time domain data sequences, and then obtaining a new group of time domain data sequences by performing a misaligned overlapping and adding operation on the respective sets of time domain data sequences, wherein after the filtering or windowing is performed, an interval between adjacent sets of time domain data sequences generated by the respective inverse fast Fourier transforms is half of a length of each set of time domain data sequences.

In an exemplary embodiment, the data to be transmitted includes at least one of constellation point modulated data and reference signal data.

In an exemplary embodiment, K = 2 or K = 4 or K = 16 or K = 32.

An embodiment of the present disclosure also provides an electronic apparatus, including a memory and a processor, wherein the memory stores a computer program, and the processor is configured to run the computer program so as to execute the operations in any one of the method embodiments.

As an exemplary implementation of the embodiment, the processor may be configured to execute the following operations S1 to S3 by means of a computer program:
In operation S1, data to be transmitted is transmitted in N frequency domain resource blocks, wherein the N frequency domain resource blocks respectively contain a same number K of sub-carriers, K is an ith power of 2, i is a positive integer, and N is an integer greater than 1.

In operation S2, an inverse Fourier transform is respectively performed on data to be transmitted on the K sub-carriers of each of the N frequency domain resource blocks so as to obtain N groups of data sequences, wherein a number of points of the inverse Fourier transform is 2K.

In operation S3, an inverse Fourier transform is performed on the N groups of data sequences so as to obtain one group of time domain data sequences, and transmitting the group of time domain data sequences.

Alternatively, in another embodiment, the processor may be configured to perform the following operations S1 to S3 by means of a computer program:
In operation S1, data to be transmitted is transmitted in N frequency domain resource blocks, wherein the N frequency domain resource blocks respectively contain a same number K of sub-carriers, K is an ith power of 2, i is a positive integer, and N is an integer greater than 1.

In operation S2, an inverse Fourier transform is respectively performed on data to be transmitted on the K sub-carriers of each of the N frequency domain resource blocks so as to obtain N groups of data sequences, wherein a number of points of the inverse Fourier transform is 2K.

In operation S3, an inverse Fourier transform is performed on the N groups of data sequences so as to obtain one group of time domain data sequences, and transmitting the group of time domain data sequences.

In an exemplary embodiment, the electronic apparatus may further include a transmission device and an input/output device, wherein the transmission device is connected to the processor, and the input/output device is connected to the processor.

For implementation examples of this embodiment, reference may be made to the foregoing embodiments and implementation examples of the described embodiments, and details are not repeatedly described in this embodiment.

Obviously, those having ordinary skill in the art should understand that each module or each operation in the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. Thus, the present disclosure is not limited to any particular combination of hardware and software.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

## Claims

1. A data transmission method, comprising:
transmitting, in N frequency domain resource blocks, data to be transmitted, wherein the N frequency domain resource blocks respectively contain a same number K of sub-carriers, K is an ith power of 2, i is a positive integer, and N is an integer greater than 1;
respectively performing an inverse Fourier transform on data to be transmitted on the K sub-carriers of each of the N frequency domain resource blocks so as to obtain N groups of data sequences, wherein a number of points of the inverse Fourier transform is 2K; and
performing an inverse Fourier transform on the N groups of data sequences so as to obtain one group of time domain data sequences, and transmitting the group of time domain data sequences.

2. The data transmission method according to claim 1, wherein
frequency spectrum intervals between adjacent frequency domain resource blocks in the N frequency domain resource blocks are equal.

3. The data transmission method according to claim 1, wherein
spectrum bandwidths of the N frequency domain resource blocks are equal.

4. The data transmission method according to claim 1, wherein
sub-carrier intervals of the N frequency domain resource blocks are equal.

5. The data transmission method according to claim 1, wherein the respectively performing an inverse Fourier transform on data to be transmitted on the K sub-carriers of each of the N frequency domain resource blocks so as to obtain N groups of data sequences comprises:
adding K zeros to the data to be transmitted on the K sub-carriers, and then performing an oversampling inverse Fourier transform on the data to be transmitted added with the K zeros, so as to obtain the N groups of data sequences.

6. The data transmission method according to claim 1, wherein in a process of respectively performing the inverse Fourier transform on the data to be transmitted on the K sub-carriers of each of the N frequency domain resource blocks, zero frequency positions of respective inverse Fourier transforms or positions of zero sub-carriers in a frequency domain of the respective inverse Fourier transforms are different.

7. The data transmission method according to claim 1, wherein in a process of respectively performing the inverse Fourier transform on the data to be transmitted on the K sub-carriers of each of the N frequency domain resource blocks, zero frequency positions or zero sub-carriers of respective inverse Fourier transforms are respectively within a frequency range of the K sub-carriers of each of the N frequency domain resource blocks.

8. The data transmission method according to claim 1, wherein in a process of respectively performing the inverse Fourier transform on the data to be transmitted on the K sub-carriers of each of the N frequency domain resource blocks, zero frequency positions or zero sub-carriers of respective inverse Fourier transforms are respectively in one of the K sub-carriers of each of the N frequency domain resource blocks.

9. The data transmission method according to claim 1, wherein in a process of performing the inverse Fourier transform on the N groups of data sequences, the inverse Fourier transform is an oversampling inverse Fourier transform, and the inverse Fourier transform has more than N Inverse Fast Fourier Transform, IFFT, points.

10. The data transmission method according to claim 1, further comprising: performing one inverse Fourier transform on every N pieces of data, wherein the N pieces of data are respectively from the N groups of data sequences.

11. The data transmission method according to claim 10, further comprising:
performing the inverse Fourier transform after adding data of other frequency domain resource blocks to the N pieces of data, wherein the other frequency domain resource blocks are not in the N frequency domain resource blocks.

12. The data transmission method according to claim 1, further comprising: obtaining the one group of time domain data sequences by serially linking time domain data sequences generated by multiple inverse Fourier transforms.

13. The data transmission method according to claim 1, wherein before transmitting the group of time domain data sequences, the data transmission method further comprises:
filtering the group of time domain data sequences, wherein the filtering comprises at least one of: single-phase filtering, multi-phase filtering, and windowing.

14. The data transmission method according to claim 13, wherein the filtering or windowing comprises: respectively performing a repetition and windowing operation on respective sets of time domain data sequences generated by respective inverse Fourier transforms in the group of time domain data sequences, and then obtaining a new group of time domain data sequences by performing a misaligned overlapping and adding operation on the respective sets of time domain data sequences, wherein
after the filtering or windowing is performed, an interval between adjacent sets of time domain data sequences generated by the respective inverse fast Fourier transforms is half of a length of each set of time domain data sequences.

15. The data transmission method according to claim 1, wherein the data to be transmitted comprises at least one of constellation point modulated data and reference signal data.

16. The data transmission method according to claim 1, wherein K = 2 or K = 4 or K = 16 or K = 32.

17. A data transmission apparatus, comprising:
a transmission module, configured to transmit data to be transmitted in N frequency domain resource blocks, wherein the N frequency domain resource blocks respectively contain a same number K of sub-carriers, K is an ith power of 2, i is a positive integer, and N is an integer greater than 1;
a transformation module, configured to respectively perform an inverse Fourier transform on data to be transmitted on the K sub-carriers of each of the N frequency domain resource blocks so as to obtain N groups of data sequences, wherein a number of points of the inverse Fourier transform is 2K; and
a processing module, configured to perform an inverse Fourier transform on the N groups of data sequences so as to obtain one group of time domain data sequences, and transmitting the group of time domain data sequences.

18. A computer readable storage medium, wherein the computer readable storage medium stores a computer program, and the computer program, when running on a processor, is configured to cause the processor to execute the data transmission method according to any one of claims 1 to 16.

19. An electronic apparatus, comprising a memory and a processor, wherein the memory stores a computer program, and the processor is configured to run the computer program so as to execute the data transmission method according to any one of claims 1 to 16.
